# EUROPÄISCHE PATENTSCHRIFT

(11) **EP 2 565 474 B1**
(45) Veröffentlichungstag und Bekanntmachung des Hinweises auf die Patenterteilung: **02.10.2019**
(21) Anmeldenummer: 12179344.2
(22) Anmeldetag: 06.08.2012
(51) Int. Cl.: F16C 9/02, F16C 17/02, F16C 33/12

(54) **Tragteil zur Bildung eines Gleitlagers, ein Verfahren zur Herstellung eines Tragteils**
Support element for forming a sliding bearing,method for producing a support element
Elément de support pour la formation d'un palier lisse, procédé de fabrication d'un élément de support

(30) Priorität: 31.08.2011 EP 11179483
(43) Veröffentlichungstag der Anmeldung: 06.03.2013
(73) Patentinhaber: Wärtsilä Schweiz AG, 8401 Winterthur (CH)
(72) Erfinder: Schlager, Dietmar Dr., 8408 Winterthur (CH); Züger, Reto, 8902 Urdorf (CH)
(74) Vertreter: Intellectual Property Services GmbH

(56) Entgegenhaltungen:
- WO-A1-2007/131742
- WO-A1-2010/130323
- DE-U1- 8 206 353
- FR-A- 1 104 309
- GB-A- 665 480
- GB-A- 2 068 057
- US-A- 3 406 445
- US-A1- 2009 232 431

## Beschreibung

Die Erfindung betrifft ein Tragteil aus einem eisenhaltigen Grundwerkstoff, insbesondere Lagerschale für ein Gleitlager einer Hubkolbenbrennkraftmaschine, im Speziellen Zweitakt-Grossdieselmotor, ein Gleitlager mit einem Tragteil, ein Verfahren zur Herstellung eines Gleitlagers, sowie eine Hubkolbenbrennkraftmaschine mit einem Gleitlager gemäss dem Oberbegriff der unabhängigen Ansprüche.

Gleitlager finden in der Maschinentechnik in einer kaum übersehbaren Anzahl von Ausführungsformen Verwendung. Beispielweise werden in Hubkolbenbrennkraftmaschinen Gleitlager als Kurbelwellenlager, Pleuellager, Drucklager, Kreuzkopfzapfenlager, Propellerwellenlager oder in vielen anderen Anwendungen verwendet.

Aus der WO 00/23718 ist beispielsweise ein Gleitlager sowie ein Verfahren zur Herstellung eines Gleitlagers offenbart, wobei eine aus Weißmetall bestehende Beschichtung an ein aus einem Eisenwerkstoff bestehendes Tragteil anlegiert wird. Die Bildung einer Legierung erfordert jedoch die Anwesenheit flüssiger Legierungskomponenten, so dass beim Beschichtungsvorgang dementsprechend viel Wärme freigesetzt wird, wodurch nicht nur das Weißmetall schmilzt, sondern auch an der laufflächenseitigen Oberseite des Tragteils ein aus geschmolzenem Grundwerkstoff bestehendes Metallbad erzeugt wird. Die so erzeugten Schmelzen von Weißmetall und Eisenwerkstoff können miteinander legieren, wobei in großem Umfang FeSn₂ entsteht. Hierbei entsteht dementsprechend eine vergleichsweise dicke Verbindungszone, die weitgehend aus FeSn₂ besteht. Diese Verbindungszone ergibt zwar eine gute metallurgische Verbindung zwischen dem Grundwerkstoff und der Beschichtung, jedoch stellt FeSn₂ ein sehr sprödes Material dar, so dass es bereits bei geringeren Belastungen der bekannten Lageranordnung zur Bildung von Rissen und zu Sprödbruch kommen kann. Hinzu kommt, dass im Falle einer ungünstigen Abkühlung eine Umwandlung des beschichtungsnahen Eisenwerkstoffs zu Martensit stattfinden kann, der ebenfalls sehr spröde ist, wodurch der vorstehend genannte Nachteil noch verstärkt wird.

Die Folge ist, dass sich bei einem Lager der zuvor beschriebenen Art infolge der hohen Sprödigkeit und geringen Streckfähigkeit innerhalb eines vergleichsweise dicken Zwischenbereichs zwischen dem Stahl des Grundwerkstoffs und der Weissmetall Lagerschicht eine entsprechend kurze Lebensdauer ergibt.

Um dies zu vermeiden ist es auch bekannt, eine aus Lagermetall wie Weißmetall bestehende Beschichtung im Schleudergußverfahren auf das Tragteil aufzubringen. Dabei unterbleibt zwar die Bildung eines aus geschmolzenem Grundwerkstoff bestehenden Metallbads. Bei der Erstarrung des im Schleudergussverfahren aufgebrachten Weißmetalls kann es jedoch zu einer Trennung der Legierungskomponenten kommen, indem zunächst aus Cu₆Sn₅ bestehende, nadelförmige Kristalle und dann aus SbSn bestehende kubische Kristalle ausfallen und schließlich die verbleibende zinnreiche Matrix erstarrt.

Die Dichte von Cu₆Sn₅ ist größer, diejenige von SbSn kleiner als die Dichte der länger flüssigen Matrix. Die Cu₆Sn₅ -Kristalle wandern dementsprechend radial nach außen und schwächen dabei den Bereich, mit dem die Weißmetall-Beschichtung an den Grundwerkstoff anschließt, was sich ebenfalls ungünstig auf die Lebensdauer auswirken kann.

Zur Vermeidung dieser und verwandter Probleme wird in der WO 2007/131 742 A1 ein Gleitlager und ein Verfahren zur Herstellung eines Gleitlagers vorgeschlagen, bei welchem zwischen der reinen Weissmetallschicht und dem eisenhaltigen Grundwerkstoff eine relativ dünne FeSn₂ enthaltende Verbindungszone ausgebildet wird, die höchstens 10µm dick ist. Ein anderes Beispiel eines Gleitlagers und ein Verfahren zur Herstellung eines Gleitlagers ist aus der GB 665,480 bekannt, wobei die Menge von FeSn₂ in der Verbindungszone minimiert worden ist.

Diese Lösung stellt jedoch lediglich einen Kompromiss dar, da die FeSn₂ Schicht zwar relativ dünn ist, aber eben immer noch vorhanden ist, so dass das Problem des Sprödbruchs und der Rissbildung immer noch nicht abschliessend gelöst ist. Insbesondere für Gleitlager, die enorm hohen Belastungen ausgesetzt sind, wie zum Beispiel Kurbelwellenlager von Zweitakt Grossdieselmotoren, bei welchen pro Zylinder durchaus Antriebsleistungen von bis zu 10.000 KW oder sogar noch mehr erzeugt werden können, besteht das Problem des Sprödbruchs und der Rissbildung weiter fort, weil die Verformungsfähigkeit der Gleitlager gemäss WO 2007/131 742 A1 bei weitem noch nicht ausreichend ist.

Aufgabe der Erfindung ist es daher ein neues Tragteil für ein Gleitlager bereitzustellen, bei welchem die Probleme mit der FeSn₂ Verbindungszone nicht mehr auftreten, so dass Sprödbruch und Rissbildung praktisch ausgeschlossen werden können. Gleichzeitig soll ein Lager mit einem einfacheren Schichtaufbau bereitgestellt werden, wobei gleichzeitig an sich bekannte Verfahren zur Herstellung eingesetzt werden können, so dass keine neue Ausrüstung zur Herstellung der neuen Lager bereitgestellt werden müssen.

Die diese Aufgaben lösenden Gegenstände der Erfindung sind durch die Merkmale der unabhängigen Ansprüche der jeweiligen Kategorie gekennzeichnet.

Die abhängigen Ansprüche beziehen sich auf besonders vorteilhafte Ausführungsformen der Erfindung.

Die Erfindung betrifft somit ein Tragteil aus einem eisenhaltigen Grundwerkstoff, insbesondere Lagerschale für ein Gleitlager, auf welchem Tragteil laufflächenseitig ein ein Lagermetall umfassendes, mindestens eine Teilschicht umfassendes Schichtsystem vorgesehen ist. Dabei ist mindestens eine dem Tragteil direkt benachbarte Tragteilschicht des Schichtsystems aus einem Sn enthaltenden Material, vorzugsweise Weißmetall, aufgebaut. Erfindungsgemäss ist die Tragteilschicht mit dem Grundwerkstoff durch eine Verbindungszone metallurgisch verbunden, wobei in der Verbindungszone im Wesentlichen kein FeSn₂ ausgebildet ist.

Dadurch, dass eine aus FeSn₂ bestehende Verbindungszone praktisch vollständig unterdrückt ist und somit auch nicht in einem geringen, technisch relevanten Umfang zugelassen wird, ist sichergestellt, dass die Verformungsfähigkeit des erfindungsgemäßen Gleitlagers insgesamt nicht mehr negativ beeinflusst wird, so dass nunmehr eine ausreichend hohe Sicherheit gegen Sprödbruch und Rissbildung gewährleistet ist.

Es hat sich dabei entgegen aller gängigen Lehrmeinungen völlig überraschend gezeigt, dass sich auch ohne das Vorhandensein einer FeSn₂ Schicht eine gute metallurgische Anbindung der Beschichtung an den eisenhaltigen Grundwerkstoff des Tragteils und damit eine hohe Haftfestigkeit erzielen lässt. Diese im Stand der Technik stets vertretene Meinung beruht wahrscheinlich auf dem technischen Vorurteil, dass sich eine FeSn₂ Schicht durch Diffusionsvorgänge beim Beschichten mit flüssigem Weissmetall zwingend und damit automatisch ausbildet. Dieses Vorurteil ist durch die vorliegende Erfindung widerlegt worden.

In einem besonders bevorzugten Ausführungsbeispiel umfasst zumindest die Tragteilschicht und / oder die Verbindungszone neben Sn mindestens ein chemisches Element der Gruppe der chemischen Elemente bestehend aus As, P, Sb, Zn, Cd, Mn, Cu und Ni. Es hat sich dabei gezeigt, dass insbesondere die Anwesenheit von P und / oder As in der Tragteilschicht und / oder in der Verbindungszone eine Ausbildung des aus dem Stand der bekannten FeSn₂ in der Verbindungszone weitgehend unterdrückt, wobei bereits geringe Mengen von P und As für diesen Effekt ausrechend sind.

Typischerweise enthält zumindest die Tragteilschicht und / oder die Verbindungszone Sn im Bereich von 80% bis 95%, wobei ein Anteil der chemischen Elemente As und / oder P von bis 3%, bevorzugt im Bereich von 0.1% bis 2% in der Tragschicht bereits die Bildung der FeSn₂ Schicht unterdrücken kann.

Dabei können in der Tragschicht auch weitere chemische Elemente wie Sb im Bereich von 3% bis 12%, die chemischen Elemente Ni und / oder Cu im Bereich von 1% bis 5%, und Cd im Bereich von 0% bis 1,5% in der Tragteilschicht vorhanden sein und in geeigneter Kombination und Menge ebenfalls die Ausbildung der FeSn₂ Schicht unterdrücken.

Es versteht sich dabei, dass ein Schichtsystem eines erfindungsgemässen Tragteils noch weitere Teilschichten gleicher oder anderer chemischer Zusammensetzung umfassen kann, die je nach Anwendungsfall bestimmte Aufgaben wie Korrosionsfestigkeit, Beständigkeit gegen besonders hohe Temperaturen oder besonders hohe mechanische Belastungen usw. erfüllen können.

Dabei hat sich herausgestellt, dass das Fehlen des FeSn₂ in der Verbindungszone keinesfalls die gute metallurgische Anbindung der Weissmetallbeschichtung, also der Tragteilschicht beeinflusst. Auch dieses Vorurteil konnte durch die vorliegende Erfindung ausgeräumt werden. Bei der vorliegenden Erfindung ergibt sich nämlich ebenfalls eine hervorragende, wenn nicht bessere metallurgische Anbindung der Tragteilschicht an den eisenhaltigen Grundwerkstoff des Tragteils und damit eine zumindest ebenso gute, wenn nicht bessere hohe Haftfestigkeit.

Vielmehr ist es eine Erkenntnis der Erfindung, dass die gute Haftfestigkeit durch die Dicke der Verbindungszone von zum Beispiel höchstens 15µm, im Speziellen höchstens 0.1µm bis 10µm, bevorzugt zwischen 0.01 µm und 5µm für die gute Haftfestigkeit verantwortlich ist, wobei die optimale Dicke der Verbindungszone etwas von der genauen chemischen Zusammensetzung abhängt.

Dabei ist der Grundwerkstoff des Tragteils zumindest in einem die Tragteilschicht aufnehmenden Bereich frei von Martensit, wodurch ebenfalls die Haftfestigkeit bzw. die Sprödigkeit im Bereich der Tragteilschicht positiv beeinflusst wird, wie aus dem Stand der Technik im Prinzip bereits bekannt.

Dabei weist eine, mehrere oder jede Sn enthaltende Teilschicht des Schichtsystems, insbesondere die Tragteilschicht und / oder die Verbindungszone besonders bevorzugt eine im Wesentlichen homogene Struktur mit einer gleichmässigen Verteilung von Cu₆Sn₆-Kristallen und SbSn-Kristallen auf.

Die Erfindung betrifft weiter ein Verfahren zur Herstellung eines Tragteils aus einem eisenhaltigen Grundwerkstoff, insbesondere ein Verfahren zur Herstellung einer Lagerschale für ein Gleitlager. Dabei wird auf dem Tragteil laufflächenseitig ein ein Lagermetall umfassendes Schichtsystem vorgesehen, wobei eine dem Tragteil direkt benachbarte Tragteilschicht des Schichtsystems aus einem Sn enthaltenden Beschichtungsmaterial, vorzugsweise aus Weißmetall aufgebracht wird. Erfindungsgemäss wird die Tragteilschicht mit dem Grundwerkstoff durch eine Verbindungszone metallurgisch verbunden, wobei in der Verbindungszone im Wesentlichen kein FeSn₂ ausgebildet wird. In der Praxis wird die Tragteilschicht bevorzugt durch Aufschmelzen auf den eisenhaltigen Grundwerkstoff aufgebracht, und die zum Aufschmelzen des Sn enthaltenden Beschichtungsmaterials benötigte Wärmeenergie wird so kontrolliert, dass bevorzugt nur das Beschichtungsmaterial vollständig aufschmilzt und der eisenhaltige Grundwerkstoff beim Beschichtungsvorgang im festen Zustand verbleibt, so dass eine Martensitbildung im eisenhaltigen Grundwerkstoff, bevorzugt Stahl, verhindert wird. Es bedarf dabei kaum der Erwähnung, dass zur Herstellung eines erfindungsgemässen Tragteils selbstverständlich ein Martensit freier Grundwerkstoff verwendet wird, auf den dann das Sn-haltige Schichtsystem der Erfindung aufgebracht wird.

Dabei kann im Speziellen das Beschichtungsverfahren ein Schleudergiessverfahren, ein Schwerkraftgiessverfahren, ein Wolfram-Inertgas-Schweissverfahren, ein Laserschweissverfahren, ein Lötverfahren oder Sprengplattieren sein, wobei in bestimmten Fällen mindestens eine Teilschicht des Schichtsystems auf den eisenhaltigen Grundwerkstoff auch in einem Pressverfahren aufgepresst oder unter Druck aufgerollt werden kann. Es versteht sich von selbst, dass im Prinzip auch jedes andere Verfahren verwendet werden kann, das insbesondere die Bildung des schädlichen Martensits verhindert und die Bildung von FeSn₂ in der Verbindungszone verhindert.

Das Sn enthaltende Beschichtungsmaterial kann z.B. als als Pulver, und / oder als Band, und / oder als Draht zugeführt werden.

Die konkreten Verfahren zur Herstellung der Schichtsysteme auf erfindungsgemässen Tragteilen sind dabei zum Teil im Prinzip aus dem Stand der Technik, beispielweise aus der WO 2007/131742 zumindest teilweise an sich bekannt. In einer bevorzugten Variante wird beispielweise zumindest eine erste Lage der Beschichtung durch Aufschmelzen auf den eisenhaltigen Grundwerkstoff aufgebracht, wobei die zum Aufschmelzen erfolgende Übertragung von Energie auf die zu beschichtende Oberfläche und auf das dieser zugeführte Beschichtungsmaterial wie bereits erwähnt derart kontrolliert erfolgt, dass bevorzugt nur das verwendete Beschichtungsmaterial vollständig schmilzt und der Grundwerkstoff bevorzugt vollständig im erstarrten Zustand verbleibt.

Dadurch erzielt man in vorteilhafter Weise einen so geringen Wärmeeintrag in den Grundwerkstoff, dass die Bildung eines aus geschmolzenem Grundwerkstoff bestehenden Metallbads an der zu beschichtenden Oberfläche bevorzugt unterbleibt. D.h., das Beschichtungsmaterial wird auf eine feste eisenhaltige Metallunterlage aufgeschmolzen, wobei in Folge der vorhandenen Wärme eine Diffusion in Gang kommt, welche die erwünschte metallurgische Anbindung der Beschichtung an den Grundwerkstoff gewährleistet, ohne dass sich ein Martensit ausbildet. Die Diffusionstiefe, die unter anderem abhängig von der Erwärmung des Grundwerkstoffs ist, kann dabei auf einfache Weise so gesteuert werden, dass die hier als Folge der Diffusion erhaltene Verbindungszone innerhalb gewünschter Grenzen von höchstens 15µm, vorzugsweise 0,5µm- 5µm liegt. Gleichzeitig können, wie erwähnt eine Martensitbildung im Bereich des Grundwerkstoffs sowie eine ungleichmäßige Kristallverteilung im Bereich der Beschichtung vermieden werden.

Eine vorteilhafte Ausgestaltung des erfindungsgemäßen Verfahrens kann darin bestehen, dass das zinnhaltige Beschichtungsmaterial zusätzlich zum Beispiel Zink enthält. Dadurch kann das früher zur Beeinflussung der Kristallbildung benötigte Cadmium entfallen, was die Umweltverträglichkeit erhöht.

Die Erfindung betrifft weiter ein Gleitlager, insbesondere ein Gleitlager für einen Zweitakt Grossdieselmotor mit einem Tragteil nach einem der vorangehenden Ansprüche, sowie eine Hubkolbenbrennkraftmaschine, insbesondere Zweitakt Grossdieselmotor mit einem erfindungsgemässen Gleitlager. Dabei kann das Gleitlager z.B. ein Kurbelwellenlager, und / oder ein Pleuellager, und / oder ein Drucklager, und / oder ein Kreuzkopfzapfenlager, und / oderein Propellerwellenlager oder im Prinzip auch jedes andere Lager, auch ein Lager für jede andere Maschine, die keine Hubkolbenbrennkraftmaschine ist, sein.

Es versteht sich von selbst, dass die in dieser Anmeldung beschriebenen Beispiele von Ausführungsformen erfindungsgemässer Tragteile und Gleitlager und die erwähnten Verfahren zu deren Herstellung lediglich exemplarisch zu verstehen sind, und insbesondere auch alle geeigneten Kombinationen der dargestellten Ausführungsbeispiele von der Erfindung umfasst sind. Dabei versteht der Fachmann ohne Weiteres einfache Weiterbildungen der Erfindung, auch wenn diese nicht explizit beschrieben sind, aber solange diese innerhalb des durch die Ansprüche definierten Schutzumfangs liegen.

## Patentansprüche

1. Tragteil aus einem eisenhaltigen Grundwerkstoff, insbesondere Lagerschale für ein Gleitlager, auf welchem Tragteil laufflächenseitig ein ein Lagermetall umfassendes Schichtsystem vorgesehen ist, wobei eine dem Tragteil direkt benachbarte Tragteilschicht des Schichtsystems aus einem Sn enthaltenden Material, vorzugsweise Weißmetall, aufgebaut ist, **dadurch gekennzeichnet, dass** die Tragteilschicht mit dem Grundwerkstoff durch eine Verbindungszone metallurgisch verbunden ist, wobei in der Verbindungszone im Wesentlichen kein FeSn₂ ausgebildet ist.

2. Tragteil nach Anspruch 1, wobei die Tragteilschicht und / oder die Verbindungszone neben Sn mindestens ein chemisches Element der Gruppe der chemischen Elemente bestehend aus As, P, Sb, Zn, Cd, Mn, Cu und Ni umfasst.

3. Tragteil nach einem der Ansprüche 1 oder 2, wobei Sn im Bereich von 80% bis 95%, und die Elemente As und / oder P bis 3%, bevorzugt im Bereich von 0.1% bis 2% in der Tragschicht und / oder in der Verbindungszone vorhanden sind.

4. Tragteil nach einem der vorangehenden Ansprüche, wobei Sb im Bereich von 3% bis 12%, die chemischen Elemente Ni und / oder Cu im Bereich von 1% bis 5%, und Cd im Bereich von 0% bis 1,5% in der Tragteilschicht und / oder in der Verbindungszone vorhanden sind.

5. Tragteil nach einem der vorangehenden Ansprüche, wobei die Dicke der Verbindungszone höchstens 15µm, im Speziellen höchstens 0.1µm bis 10µm, bevorzugt zwischen 0.01µm und 5µm beträgt.

6. Tragteil nach einem der vorangehenden Ansprüche, wobei der Grundwerkstoff des Tragteils zumindest in einem die Tragteilschicht aufnehmenden Bereich frei von Martensit ist.

7. Tragteil nach einem der vorangehenden Ansprüche, wobei eine Sn enthaltende Teilschicht des Schichtsystems, insbesondere die Tragteilschicht und / oder die Verbindungszone eine im Wesentlichen homogene Struktur mit einer gleichmässigen Verteilung von Cu₆Sn₆-Kristallen und SbSn-Kristallen aufweist.

8. Gleitlager, insbesondere Gleitlager für einen Zweitakt Grossdieselmotor mit einem Tragteil nach einem der vorangehenden Ansprüche.

9. Verfahren zur Herstellung eines Tragteils aus einem eisenhaltigen Grundwerkstoff, insbesondere Verfahren zur Herstellung einer Lagerschale für ein Gleitlager, auf welchem Tragteil laufflächenseitig ein ein Lagermetall umfassendes Schichtsystem vorgesehen wird, wobei eine dem Tragteil direkt benachbarte Tragteilschicht des Schichtsystems aus einem Sn enthaltenden Beschichtungsmaterial, vorzugsweise Weißmetall, aufgebracht wird, **dadurch gekennzeichnet, dass** die Tragteilschicht mit dem Grundwerkstoff durch eine Verbindungszone metallurgisch verbunden wird, wobei in der Verbindungszone im Wesentlichen kein FeSn₂ ausgebildet wird.

10. Verfahren nach Anspruch 9, wobei die Tragteilschicht durch Aufschmelzen auf den eisenhaltigen Grundwerkstoff aufgebracht wird, und die zum Aufschmelzen des Sn enthaltenden Beschichtungsmaterials benötigte Wärmeenergie so kontrolliert wird, dass nur das Beschichtungsmaterial vollständig aufschmilzt und der eisenhaltige Grundwerkstoff beim Beschichtungsvorgang bevorzugt im festen Zustand verbleibt.

11. Verfahren nach einem der Ansprüche 9 oder 10, wobei das Beschichtungsverfahren ein Schleudergiessverfahren, ein Schwerkraftgiessverfahren, ein Wolfram-Inertgas-Schweissverfahren, ein Laserschweissverfahren, ein Lötverfahren oder Sprengplattieren ist.

12. Verfahren nach einem der Ansprüche 9 bis 11, wobei das Sn enthaltende Beschichtungsmaterial als Pulver, und / oder als Band, und / oder als Draht zugeführt wird.

13. Verfahren nach einem der Ansprüche 9 bis 12, wobei mindestens eine Teilschicht des Schichtsystems auf den eisenhaltigen Grundwerkstoff in einem Pressverfahren aufgepresst oder unter Druck aufgerollt wird.

14. Hubkolbenbrennkraftmaschine, insbesondere Zweitakt Grossdieselmotor mit einem Gleitlager nach Anspruch 8.

15. Hubkolbenbrennkraftmaschine nach Anspruch 14, wobei das Gleitlager ein Kurbelwellenlager, und / oder ein Pleuellager, und / oder ein Drucklager, und / oder ein Kreuzkopfzapfenlager, und / oder ein Propellerwellenlager ist.

## Claims

1. A supporting element made of an iron-containing base material, in particular a bearing shell for a plain bearing, on which supporting element a layer system comprising a bearing metal is provided on the running surface side, wherein a supporting element layer of the layer system directly adjacent to the supporting element is composed of a material containing Sn, preferably white metal, **characterized in that** the supporting element layer is metallurgically bonded to the base material by a bonding zone, wherein substantially no FeSn₂ is formed in the bonding zone.

2. A supporting element according to claim 1, wherein the supporting element layer and/or the bonding zone comprises, in addition to Sn, at least one chemical element from the group of chemical elements consisting of As, P, Sb, Zn, Cd, Mn, Cu and Ni.

3. A supporting element according to anyone of the claims 1 or 2, wherein Sn is present in the range from 80% to 95%, and the elements As and/or P are present to 3%, preferably in the range from 0.1% to 2%, in the supporting layer and/or in the bonding zone.

4. A supporting element according to anyone of the preceding claims, wherein Sb is present in the range from 3% to 12%, the chemical elements Ni and/or Cu are present in the range from 1% to 5%, and Cd is present in the range from 0% to 1.5% in the supporting element layer and/or in the bonding zone.

5. A supporting element according to anyone of the preceding claims, wherein the thickness of the bonding zone is at most 15µm, especially at most 0.1µm to 10µm, preferably between 0.01µm and 5µm.

6. A supporting element according to anyone of the preceding claims, wherein the base material of the supporting element is free of martensite at least in a region receiving the supporting element layer.

7. A supporting element according to anyone of the preceding claims, wherein a partial layer containing Sn of the layer system, in particular the supporting element layer and/or the bonding zone, has a substantially homogeneous structure with a uniform distribution of Cu₆Sn₆ crystals and SbSn crystals.

8. A plain bearing, in particular a plain bearing for a two-stroke large diesel engine having a supporting element according to anyone of the preceding claims.

9. A method for the manufacture of a supporting element from an iron-containing base material, in particular a method for the manufacture of a bearing shell for a plain bearing, on which supporting element a layer system comprising a bearing metal is provided on the running surface side, wherein a supporting element layer of the layer system directly adjacent to the supporting element is applied from a coating material containing Sn, preferably white metal, **characterized in that** the supporting element layer is metallurgically bonded to the base material by a bonding zone, wherein substantially no FeSn₂ is formed in the bonding zone.

10. A method according to claim 9, wherein the supporting element layer is applied to the iron-containing base material by melting, and the thermal energy required for melting the coating material containing Sn is controlled in such a way that only the coating material melts completely and the iron-containing base material preferably remains in the solid state during the coating process.

11. A method according to anyone of the claims 9 or 10, wherein the coating method is a centrifugal casting method, a gravity casting method, a tungsten inert gas welding method, a laser welding method, a soldering method or explosive cladding.

12. A method according to anyone of the claims 9 to 11, wherein the coating material containing Sn is supplied as powder, and/or as tape, and/or as wire.

13. A method according to anyone of the claims 9 to 12, wherein at least one partial layer of the layer system is pressed onto the iron-containing base material in a pressing process or is rolled up under pressure.

14. A reciprocating internal combustion engine, in particular a two-stroke large diesel engine having a plain bearing according to claim 8.

15. A reciprocating internal combustion engine according to claim 14, wherein the plain bearing is a crankshaft bearing, and/or a connecting rod bearing, and/or a thrust bearing, and/or a crosshead journal bearing, and/or a propeller shaft bearing.

## Revendications

1. Un élément de support en un matériau de base ferreux, en particulier un coussinet de palier pour un palier lisse, dans lequel un système de couches comprenant un métal de palier est prévu sur ledit élément de support du côté de la surface de roulement, dans lequel une couche de l'élément de support du système de couches directement adjacente à l'élément de support est composée d'un matériau contenant Sn, de préférence du métal blanc, **caractérisé en ce que** la couche de l'élément de support est liée métallurgiquement au matériau de base par une zone de liaison, dans lequel sensiblement aucun FeSn₂ n'est formé dans la zone de liaison.

2. Un élément de support selon la revendication 1, dans lequel la couche de l'élément de support et/ou la zone de liaison comprend, en plus de Sn, au moins un élément chimique du groupe des éléments chimiques consistant en As, P, Sb, Zn, Cd, Mn, Cu et Ni.

3. Un élément de support selon l'une des revendications 1 ou 2, dans lequel Sn est présent dans la plage de 80 % à 95 %, et les éléments As et/ou P sont présents à 3 %, de préférence dans la plage de 0,1 % à 2 %, dans la couche de support et/ou dans la zone de liaison.

4. Un élément de support selon l'une des revendications précédentes, dans lequel Sb est présent dans la plage de 3 % à 12 %, les éléments chimiques Ni et/ou Cu sont présents dans la plage de 1 % à 5 %, et Cd est présent dans la plage de 0 % à 1,5 % dans la couche de support et/ou dans la zone de liaison.

5. Un élément de support selon l'une des revendications précédentes, dans lequel l'épaisseur de la zone de liaison est d'au plus 15 µm, en particulier d'au plus 0,1 µm à 10 µm, de préférence entre 0,01 µm et 5 µm.

6. Un élément de support selon l'une des revendications précédentes, dans lequel le matériau de base de l'élément de support est libre de martensite au moins dans une région recevant la couche de l'élément de support.

7. Un élément de support selon l'une des revendications précédentes, dans lequel une couche partielle contenant Sn du système de couches, en particulier la couche de l'élément de support et/ou la zone de liaison présente une structure sensiblement homogène avec une distribution uniforme de cristaux de Cu₆Sn₆ et de cristaux de SbSn.

8. Un palier lisse, en particulier un palier lisse pour un gros moteur diesel à deux temps ayant un élément de support selon l'une des revendications précédentes.

9. Un procédé pour fabriquer un élément de support à partir d'un matériau de base ferreux, en particulier un procédé pour fabriquer un coussinet de palier pour un palier lisse, dans lequel un système de couches comprenant un métal de palier est prévu sur ledit élément de support du côté de la surface de roulement, dans lequel une couche de l'élément de support du système de couches directement adjacente à l'élément de support est appliqué d'un matériau de revêtement contenant Sn, de préférence du métal blanc, **caractérisé en ce que** la couche de l'élément de support est liée métallurgiquement au matériau de base par une zone de liaison, dans lequel sensiblement aucun FeSn2 n'est formé dans la zone de liaison.

10. Un procédé selon la revendication 9, dans lequel la couche de l'élément de support est appliquée sur le matériau de base ferreux par fusion, et l'énergie thermique nécessaire pour faire fondre le matériau de revêtement contenant Sn est contrôlée de telle sorte que seul le matériau de revêtement fond complètement et que le matériau de base ferreux reste de préférence à l'état solide pendant le processus de revêtement.

11. Un procédé selon l'une des revendications 9 ou 10, dans lequel le procédé de revêtement est un procédé de moulage centrifuge, un procédé de moulage par gravité, un procédé de soudage au gaz inerte de tungstène, un procédé de soudage au laser, un procédé de brasage ou de placage explosif.

12. Un procédé selon l'une des revendications 9 à 11, dans lequel le matériau de revêtement contenant Sn est fourni sous forme de poudre et/ou de ruban et/ou de fil.

13. Un procédé selon l'une des revendications 9 à 12, dans lequel au moins une couche partielle du système de couches est pressée sur le matériau de base ferreux dans un procédé de pressage ou est enroulée sous pression.

14. Un moteur à combustion interne à piston alternatif, en particulier un gros moteur diesel à deux temps ayant un palier lisse selon la revendication 8.

15. Un moteur à combustion interne à piston alternatif selon la revendication 14, dans lequel le palier lisse est un palier de vilebrequin, et/ou un palier de bielle, et/ou un palier de butée, et/ou un palier de crosse de bielle, et/ou un palier d'arbre de transmission.
